# EUROPÄISCHE PATENTSCHRIFT

(11) **EP 1 795 773 B1**
(45) Veröffentlichungstag und Bekanntmachung des Hinweises auf die Patenterteilung: **27.02.2008**
(21) Anmeldenummer: 06024474.6
(22) Anmeldetag: 25.11.2006
(51) Int. Cl.: F16D 3/38, F16C 21/00

(54) **Kreuzgelenkanordnung**
Universal joint arrangement
Agencement de joint de transmission articulé

(30) Priorität: 08.12.2005 DE 102005058742
(43) Veröffentlichungstag der Anmeldung: 13.06.2007
(60) Teilanmeldung: 07009454.5
(73) Patentinhaber: Voith Turbo GmbH & Co. KG, 89522 Heidenheim (DE)
(72) Erfinder: Grawenhof, Peter, 89547 Dettingen (DE)
(74) Vertreter: Dr. Weitzel & Partner

(56) Entgegenhaltungen:
- EP-A1- 1 001 182
- EP-A1- 1 167 796

## Beschreibung

Die Erfindung betrifft eine Kreuzgelenkanordnung, im Einzelnen mit den Merkmalen aus dem Oberbegriff des Anspruches 1.

Kreuzgelenkanordnungen, insbesondere die Lagersysteme zur Lagerung von Zapfen eines Zapfenkreuzes in Gelenkgabeln für den Einsatz in Gelenkwellen sind in einer Vielzahl von Ausführungen für eine Vielzahl von Einsatzbeispielen bekannt. Stellvertretend wird dazu auf die Druckschrift G 1757 d 08/02 1.000, ,,FEM-Simulation von Gelenkwellen mit inkompatiblen Netzen", verwiesen, in der das Problem der Verformungen an den Lager- und Anschlusselementen unter Belastung offenbart wird.

Bekannt sind Ausführungen von Kreuzgelenkanordnungen für Gelenkwellen, welche wenigstens ein Zapfenkreuz umfassen, welches in wenigstens einer Gelenkgabel gelagert wird. Die Gelenkgabel selbst kann einteilig oder zweiteilig ausgeführt sein. Zur Anbindung des Zapfenkreuzes in der Gelenkgabel ist jeweils für den einzelnen Zapfen eine entsprechende Lageranordnung vorgesehen. Die Lageranordnung umfasst dabei wenigstens ein Radiallager und ein Axiallager. Für die Anordnung des Axiallagers bestehen eine Vielzahl von Möglichkeiten, wobei jedoch unter Berücksichtigung der auftretenden Verformungen während des Betriebes der Gelenkwelle eine entsprechende konstruktive Auslegung der einzelnen Elemente der Lagerung erfolgt. Die Problematik einer derartigen Lageranordnung besteht darin, dass die einzelnen Wälzlager neben einem hohen Grunddrehmoment zusätzlich durch hohe Drehmomentstöße und gleichzeitige Querbeschleunigungen, insbesondere beim Einsatz in Walzwerksantrieben, beansprucht werden. Diese Belastungen führen zu elastischen Verformungen der Gelenkgabel sowohl im Bereich der Flansche als auch innerhalb des Gabelauges. Im Reversierbetrieb treten die Verformungen zusätzlich mit positivem oder negativen Wert auf. Diese betriebs- sowie konstruktionsbedingten Einflüsse ergeben Fluchtungsfehler mit einer ungünstigen Lasteinleitung in das Lager, nämlich einen Mittenversatz der Gabelbohrung, Schrägstellung der Bohrung, Durchbiegung des Zapfens sowie ein Radialspiel im Wälzlager und die Einfederung des Wälzlagers, wie in der Druckschrift G 17 57 Abb. 12 offenbart.. Die Folge ist dabei eine ungleichmäßige radiale Druckverteilung in der Lagerbohrung, wodurch örtlich hohe Belastungen an den Kontaktstellen der Wälzkörper des Radiallagers und überhöhte Kantenspannungen entstehen. Aus den elastischen Verformungen resultieren außerdem Relativbewegungen zwischen Zapfen und Gabelbohrung in axialer Richtung. Werden diese Relativbewegungen durch eine zu steife Lagereinbettung behindert, entstehen hohe Zwangskräfte und damit hohe Belastungen im Wälzkontakt der Axiallager. Dies führt in einem Segment des Axiallagers zu hohen Kantenspannungen und in dem gegenüberliegenden Segment zum Abheben der Rollen. Die ungleiche Belastung führt zu einer Tragfähigkeitsminderung. Die konstruktive Ausführung, insbesondere die Auslegung der einzelnen Bauelemente, ist dabei immer auf die möglicherweise auftretenden Verformungswege abzustimmen. Es ist nicht möglich, unabhängig von der Kenntnis dieser Einflüsse eine befriedigende Konstruktion bereitzustellen.

Eine Lösung dieser Problematik ist aus der Druckschrift EP 1 167 796 B1 bekannt. Diese ist durch die besondere Ausgestaltung einer Axiallagerlauffläche an einem Druckring charakterisiert. Hier wird allein durch die Ausgestaltung des Druckringes aufgrund des abgetragenen Materials ein Freiweg für die Wälzelemente bzw. Gleitflächen geschaffen Der Nachteil dieser Ausführung besteht darin, dass sich der erforderliche Weg somit nicht elastisch einstellen kann, sondern über die Formgebung, welche durch den Materialabtrag bestimmt ist, vorgegeben wird. Dadurch ist für unterschiedliche Belastungen, insbesondere im Teillastbereich ein vollständiger Formschluss nicht gegeben und die negativen Folgen der Ausführung gemäß dem Stand der Technik können nicht ganz ausgeschlossen werden. Die aus dieser Druckschrift EP 1 167 796 B1 bekannten Merkmale sind im Oberbegriff von Anspruch 1 zusammengefasst.

Aus DE 195 10 761 B4 ist eine Ausführung eines Zapfenlagers in Buchsenausführung vorbekannt, welches ein als Kunststoffscheibe ausgebildetes Anlaufelement besitzt. Dieses ist jedoch ohne weitere Maßnahmen nicht in der Lage, die erforderlichen Ausgleichswege zur Verfügung zu stellen.

Ferner wird noch auf die EP 1 001 182 A1 verwiesen.

Der Erfindung liegt daher die Aufgabe zugrunde, ein Lagersystem für Kreuzgelenkanordnungen der eingangs genannten Art, insbesondere für den Einsatz in schweren Gelenkwellen derart weiterzuentwickeln, dass die genannten Nachteile vermieden werden, d. h. dieses einen einfachen Aufbau sowie eine geringe Anzahl von Bauelementen aufweist. Die Ausschaltung der negativen Einflüsse bei Verformung der drehmomentübertragenden Bauteile auf die Lageranordnung, insbesondere das Axiallager soll dabei ohne Kenntnis der konkreten Lastfälle des Einzelfalles mit einer möglichst standardisierten Lösung völlig oder zumindest nahezu ausgeschlossen werden können. Die Kreuzgelenkanordnung, insbesondere das Lagersystem und dessen Einzelelemente sollen sich dabei durch einen geringen konstruktiven und fertigungstechnischen Aufwand sowie niedrige Kosten auszeichnen.

Die erfindungsgemäße Lösung ist durch die Merkmale des Anspruches 1 charakterisiert. Vorteilhafte Ausgestaltungen sind jeweils in den Unteransprüchen beschrieben.

Eine Kreuzgelenkanordnung umfasst zwei zueinander um 90° versetzt zueinander angeordnete Gelenkgabeln. In diesen wird ein Zapfenkreuz gelagert. Jede Gelenkgabel weist dazu einen Flanschteil und zwei Lagerteile auf, wobei die auf einer gemeinsamen Achse liegenden Zapfen des Zapfenkreuzes jeweils in den beiden Lagerteilen in einer Lagerbohrung gelagert werden. Zur Lagerung ist für jeden Zapfen ein entsprechendes Lagersystem bzw. eine Lageranordnung vorgesehen, die mindestens ein Radiallager und ein Axiallager umfasst, wobei das Axiallager entweder im Bereich der Zapfenwurzel oder an der Zapfenstirnseite angeordnet ist. Das Axiallager kann dabei als Gleitlager oder Wälzlager ausgeführt sein. Dieses stützt sich dabei erfindungsgemäß über ein Ausgleichselement in Form einer teilelastischen Federeinheit 2 am Zapfenkreuz oder der Gelenkgabel wenigstens mittelbar ab, d. h. direkt oder indirekt. Zwischengeschaltet kann somit beispielsweise ein Druckring sein.

Teilelastisch bedeutet, dass das Ausgleichselement unter hohen Belastungen die aufgrund der durch die Umfangskräfte bedingten Zwangskräfte erzeugten Verformungen der Lagerumgebung kompensiert. Teilelastisch bedeutet ferner, dass das Ausgleichselement in den Bereichen, die in Einbaulage in Bereichen geringer Verformung liegen, steif ausgeführt ist und in den Bereichen höherer Verformung elastisch. Die Teilelastizität beinhaltet somit Bereiche unterschiedlicher Steifigkeit bzw. unterschiedlicher Elastizitäten. Dadurch wird gewährleistet, dass sich das System unter Last elastisch einstellen kann, im lastfreien Zustand jedoch eine axial steife Übertragung gegeben ist. Diese werden dabei durch die geometrische Ausführung und gegebenenfalls zusätzlich durch die Materialauswahl erzeugt.

Im zweitgenannten Fall wird das Ausgleichselement durch die stoffschlüssige Verbindung von Einzelelementen aus unterschiedlichen Werkstoffen bzw. Materialkombinationen mit unterschiedlichen Steifigkeiten hergestellt. Grundsätzlich kann das Ausgleichselement als integrale Baueinheit aus einem Werkstoff bzw. einer Materialkombination gefertigt werden, wobei die unterschiedlichen Elastizitäten durch Änderung der Querschnittsgeometrie erzeugt werden.

Erfindungsgemäß ist die teilelastische Federeinheit derart ausgebildet, dass diese vorzugsweise als ringförmiges Element oder ringförmiges Element mit beliebiger Innenkontur ausgebildet ist, wobei der elastische Bereich mit einem Elastizitätsmodul zwischen 5000 bis 50000 N/mm², vorzugsweise 5000 bis 20000 N/mm² ausgeführt ist. Dabei ist das ringförmige Element in Umfangsrichtung in Bereiche höherer Steifigkeit und geringerer Steifigkeit unterteilt. Die Steifigkeitsdifferenzen werden dabei durch die Formgebung und insbesondere durch Verwendung unterschiedlich steifer Materialien realisiert. In letztem Fall sind diese Bereiche durch die Verwendung von Materialien bzw. Materialkombinationen mit unterschiedlichen E-Modulen charakterisiert. Die Bereiche in Einbaulage, die bei Drehmomentübertragung einer stärkeren natürlichen Verformung entgegenwirken und dadurch einer höheren Belastung unterliegen, sind durch geringere Querschnittsgrößen bzw. zusätzlich durch weichere Materialien charakterisiert als die Bereiche höherer Steifigkeit. Hier sind die Verformungen geringer und es wird der Querschnitt vergrößert und insbesondere steife Materialien verwendet. Die Querschnittsvergrößerung erfolgt dabei im Wesentlichen in Einbaulage in vertikaler Richtung, d. h. für das ringförmige Element betrachtet in Höhenrichtung und optional zusätzlich in Dickenrichtung. Bezüglich der konkreten Wahl der verwendeten Querschnitte bestehen keine Restriktionen. Vorzugsweise wird jedoch zur Gewährleistung eines flächigen Anliegens entsprechend des gewählten Materials des ringförmigen Elementes der elastischen Federeinheit ein rechteckiger Querschnitt bzw. eine Querschnittsgeometrie mit wenigstens einer ebenen Fläche, vorzugsweise zwei einander gegenüberliegend angeordneten Flächen gewählt. Das ringförmige Element ist zumindest durch einen Außendurchmesser charakterisiert. Die Innenkontur kann durch einen oder mehrere unterschiedliche Innendurchmesserbereiche oder eine beliebige Geometrie charakterisiert sein. Letztere Variante kommt dann zum Tragen, wenn durch eine entsprechend komplementäre Kontur an den Anschlusselementen eine lagerorientierte Zentrierung gewünscht ist, die die Einbaulage fest vorgibt.

Die elastische Federeinheit, insbesondere das ringförmige Element, kann dabei aus einem Stahl, insbesondere Federstahl, Vergütungsstahl, etc., einem Elastomer oder einem Kunststoff (Elastomer, Gummi) oder einem gummielastischen Element bestehen. Entscheidend ist, dass unter Belastung immer ein Formschluss erzeugt wird, wobei ein vollständiger Formschluss zwischen der zum Axiallager gewandten Stirnseite der elastischen Federeinheit und dem das Axiallager abstützenden Element oder dem Axiallager selbst gegeben ist.

Vorzugsweise ist das ringförmige Element symmetrisch aufgebaut, so dass der Einbau unabhängig von der Drehrichtung der mit dem Zapfenkreuz gekoppelten Welle erfolgen kann. Dabei wird das ringförmige Element der elastischen Federeinheit in einer Ansicht von oben betrachtet ausgehend vom theoretischen Mittelpunkt in radialer Richtung in zwei symmetrische Ringsegmente unterteilt. Von einer ersten durch den Mittelpunkt verlaufenden Symmetrieachse ausgehend erstreckt sich dabei jeweils ein erster Abstützbereich beidseitig in Umfangsrichtung in Richtung zu einer senkrecht zur Symmetrieachse durch den Mittelpunkt verlaufenden weiteren Symmetrieachse. Dieser erste Abstützbereich ist durch einen konstanten Querschnittsverlauf charakterisiert. An den ersten schließt sich jeweils ein zweiter Bereich an, der als zweiter teilaktiver Abstützbereich bezeichnet wird. Dieser ist im entlasteten Zustand weitestgehend passiv, unter Belastung legt dieser sich jedoch aufgrund der Materialeigenschaft und der Querschnittgestaltung an das Axiallager, insbesondere die Gleitfläche oder das Laufbahn bildende Element formschlüssig, d.h. flächig, an, indem der aktive Abstützungsbereich gleich steif bleibt und der teilelastische sich anpasst. Dabei erfolgt erfindungsgemäß die Querschnittsänderung gleichmäßig über die gesamte Breite bzw. Dicke des ringförmigen Elementes und ferner in Höhenrichtung jeweils über einen Teilbereich in Umfangsrichtung. Lediglich die Übergänge zwischen den unterschiedlichen Querschnitten erfolgen vorzugsweise nicht abrupt, sondern durch eine gleichmäßige Querschnittsänderung in Richtung zum jeweils verkleinerten oder vergrößerten Querschnitt hin.

Der Einsatz der erfindungsgemäß gestalteten elastischen Federeinheit in einer Kreuzgelenkanordnung, insbesondere im Lagersystem zur Lagerung eines Zapfens in einer Gelenkgabel, ermöglicht damit sowohl im Leerlauf, d. h. lastfreiem Betrieb auch im belasteten Zustand ein einfach zu realisierendes Ausgleichselement bei Verkippung der die Axiallagerlaufbahnen oder Gleitflächen bildenden Elemente durch die stetige Gewährleistung eines flächigen Anliegens an die diese abstützenden Elemente durch flächiges Anliegen des teilaktiven Abstützbereiches. Damit kann insbesondere beim Einsatz eines Axiallagers in Form eines Wälzlagers ein gutes Tragbild erzielt werden. Dies gilt in Analogie auch für Axiallager in Gleitlagerausführung, dessen Gleitflächen gleichmäßiger belastet werden.

Bezüglich der Ausbildung und/oder Anordnung der die ersten Abstützbereiche und die zweiten teilaktiven Abstützbereiche bildenden unterschiedlichen Querschnittsbereiche bestehen eine Vielzahl von Möglichkeiten, welche sich hinsichtlich der Erstreckung vorzugsweise in Umfangsrichtung unterscheiden können. Dabei erfolgt die Erstreckung jeweils beidseitig einer ersten Symmetrieachse im gleichen Abstand von dieser Symmetrieachse aus in Umfangsrichtung, d. h. dass jeweils ein Segmentbereich beidseitig einer ersten Symmetrieachse in einem bestimmten Abstand zur Symmetrieachse mit dem vergrößerten Querschnitt vorgesehen ist. Dies gilt dann auch für den zweiten teilaktiven Abstützbereich. Dieser ist ebenfalls symmetrisch bezogen auf die erste Symmetrieachse angeordnet und schließt sich an den bzw. die ersten Abstützbereiche an. Vorzugsweise erfolgt die Unterteilung Quadrantenweise. Die symmetrische Ausführung ermöglicht die gleiche Wirkung auch im Reversierbetrieb.

Die erfindungsgemäße Lösung ist sowohl für Ausführungen mit im Bereich der Zapfenwurzel angeordneten Axiallager als auch mit im Bereich der Zapfenstirnseite angeordneten Axiallager einsetzbar. Im erstgenannten Fall stützt sich dabei das das Axiallager bildende scheibenförmige Element bei Ausbildung als Gleitlager oder aber ein eine Axiallagerlaufbahn bildendes Element entweder direkt oder über weitere Elemente unter Zwischenschaltung der teilelastischen Federeinheit an der Zapfenwurzel ab. Im erstgenannten Fall ist zwischen Axiallager und Zapfenwurzel das teilelastische Element vorgesehen. Im zweiten Fall ist zwischen dem Axiallager bzw. dem eine Lauffläche oder eine Gleitfläche bildendes Element und der Zapfenwurzel ein weiteres Element, beispielsweise in Form eines Druckringes, vorgesehen, wobei sich das Axiallager über die teilelastische Federeinheit an diesem Druckring und über diesen an der Zapfenwurzel abstützt. Die jeweils andere Lauffläche bzw. Gleitfläche stützt sich dabei wenigstens mittelbar an der Gelenkgabel ab. Die Abstützung erfolgt beispielsweise über den Radiallageraußenring.

Bei der Anordnung an der Zapfenstirnseite können mehrere Varianten der erfindungsgemäßen Lösung unterschieden werden. Diese sind im wesentlichen dadurch charakterisiert, an welchem der Anschlusselemente das Axiallager bzw. das eine Gleitfläche und/oder eine Lauffläche bildende Element sich abstützt. Diesbezüglich werden folgende Möglichkeiten unterschieden:
a) Anlage an der Zapfenstirnseite
b) Anlage an der Lagerbohrung
c) Anlage an einem Anschlusselement, insbesondere der Radiallageraußenringbüchse
d) Anlage an einem der Elemente a) bis c) und Anlage der jeweils gegenüberliegenden Gleit- oder Lauffläche über ein Zwischenelement zur Lagerorientierung.

Auch in diesem Fall ist das Ausgleichselement in Form der teilelastischen Federeinheit im wesentlichen ringförmig ausgebildet, wobei bei gewünschter Lagerorientierung die Innenkontur nicht durch einen Durchmesser charakterisiert ist, sondern durch andere Geometrien, die mit komplementären Geometrien in Form von Vorsprüngen am Anschlusselement zusammenwirken.

Die erfindungsgemäße Lösung ist für Kreuzgelenkanordnungen mit geschlossener Gelenkgabelausführung, d.h. Lagerbohrung in Form einer Blindbohrung als auch Durchgangsöffnung denkbar. Ferner ist es unerheblich, ob die Gelenkgabel in geteilter Ausführung vorliegt. Des weiteren kann die erfindungsgemäße Lösung für Kreuzgelenkanordnungen mit Zapfenkreuzen mit in einer Ebene angeordneten Zapfenachsen oder aber auch Zapfenkreuze mit in zueinander in parallelen Ebenen versetzt angeordneten Zapfenachsen angewandt werden.

Die erfindungsgemäße Lösung wird nachfolgend anhand von Figuren erläutert. Darin ist im Einzelnen Folgendes dargestellt:
- Figur 1: verdeutlicht anhand eines Ausschnittes aus einem Axialschnitt eine erfindungsgemäß gestaltete Kreuzgelenkanordnung;
- Figur 2: verdeutlicht anhand einer perspektivischen Ansicht eine besonders vorteilhafte Ausgestaltung einer teilelastischen Federeinheit;
- Figuren 3a bis 3e: verdeutlichen in schematisch vereinfachter Darstellung Anordnungen der teilelastischen Federeinheit bei Anordnung des Axiallagers im Bereich der Zapfenstirnseite;
- Figuren 4a bis 4c: verdeutlichen Ausführungen zur Realisierung einer Zentrierfunktion;
- Figur 5: verdeutlicht die Auswirkungen der Verformung einer Gelenkgabelhälfte unter Belastung gemäß einer Ausführung aus dem Stand der Technik.

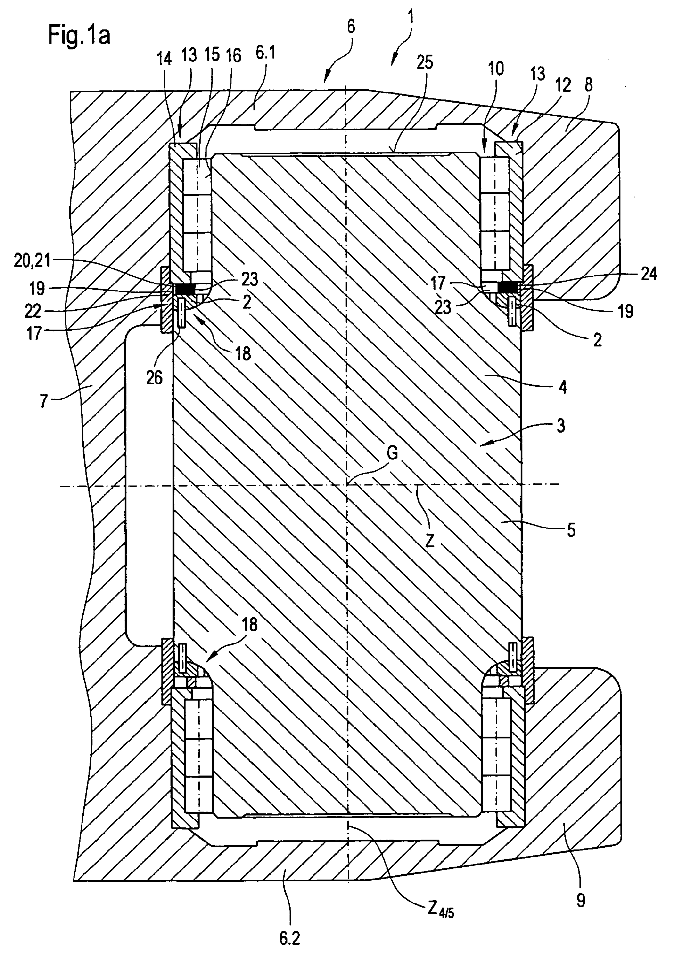

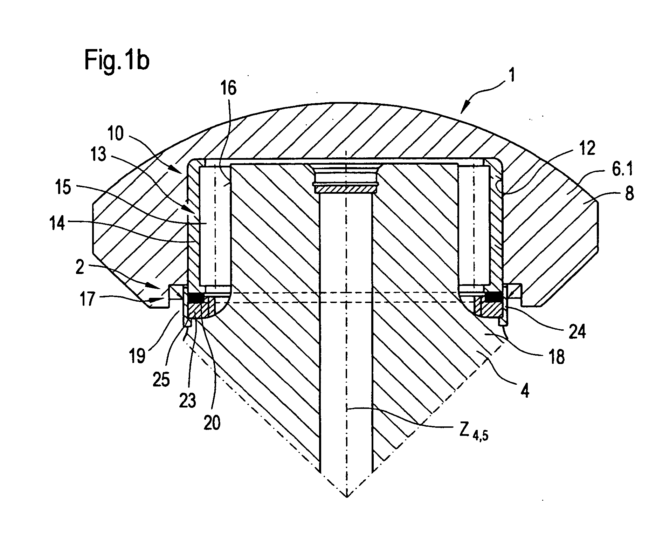

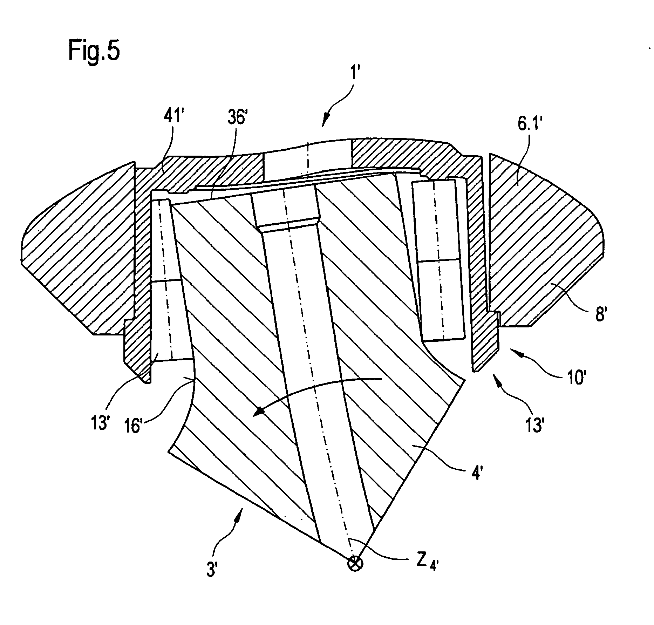

Die Figur 5 veranschaulicht zur Verdeutlichung in stark übertriebener Darstellung die der erfindungsgemäßen Lösung zugrundeliegende Problematik der Auswirkung der Verformungen auf das Lagersystem eines Zapfenkreuzes 3' einer Gelenkgabel 6' anhand eines Ausschnittes aus einem Axialschnitt durch das Zapfenkreuz 3'. Dargestellt ist beispielhaft ein Zapfen 4', welcher über ein Lagersystem 10' in einer Gelenkgabelhälfte 6.1' gelagert ist. Erkennbar ist ferner ein Lagerteil 8' der Gelenkgabelhälfte 6.1'. Das Lagersystem 10' umfasst ein Radiallager 13'. Im dargestellten Fall wird die innere Laufbahn der Wälzelemente 15' des Radiallagers 13' vom Außenumfang 16' des Zapfens 4' gebildet. Die äußere Lauffläche wird von einer Lagerbuchse 41' gebildet. Bei Drehmomentübertragung bewirkt die Umfangskraft eine ungleichmäßige Belastung des Radiallagers 13', d. h. in Rotationsrichtung sehr hohe Kantenspannungen und auf der gegenüberliegenden Seite ein Spiel zwischen den Wälzelementen 15' und den Anschlusselementen Lagerbuchse 45' bzw. Zapfen 4'. Dies gilt in Analogie auch für ein hier im Einzelnen nicht dargestelltes Axiallager, welches gemäß der Ausführung von Figur 1 beispielsweise zwischen Zapfenstirnseite 36' und Innenumfang der Lagerbuchse 41' angeordnet wäre. Dieses würde ebenfalls ungleichmäßig belastet werden.

Erkennbar ist, dass ein Axialgleitlager bei Anordnung an der Zapfenstirnseite 36' in Rotationsrichtung betrachtet im Bereich einer Ebene, die senkrecht zu einer Ebene verläuft, die von der Zapfenachse Z₄ und der Gelenkgabelachse G aufgespannt wird, nicht trägt, während der gegenüberliegende Bereich sehr hohen Kräften ausgesetzt ist.

Die Figur 1a verdeutlicht in schematisch vereinfachter Darstellung anhand eines Ausschnittes aus einem Axialschnitt durch eine Kreuzgelenkanordnung 1 die Integration eines erfindungsgemäß gestalteten Ausgleichelementes in Form einer teilelastischen Federeinheit 2. Figur 1b verdeutlicht einen Ausschnitt aus Figur 1 a. Die Kreuzgelenkanordnung 1 umfasst dazu ein Zapfenkreuz 3, welches mit seinen um 180° zueinander versetzt angeordneten Zapfen 4 und 5 in einer Gelenkgabel 6, umfassend einen Flanschteil 7 und zwei Lagerteile 8 und 9 in den Lagerteilen 8 und 9 jeweils über ein Lagersystem 10 und 11 gelagert ist. Die beiden Zapfen 4 und 5 sind dabei durch eine gemeinsame Zapfenachse Z_{4,5} charakterisiert. Das Zapfenkreuz 3 umfasst ferner um 90° versetzt zu den Zapfen 4 und 5 angeordnete Zapfen, die in einer weiteren hier nicht dargestellten Gelenkgabel gelagert sind, wobei die Gelenkgabel ebenfalls ein Flanschteil und zwei Lagerteile umfasst und die Zapfen in den Lagerteilen über ein entsprechendes Lagersystem gelagert sind. Die Gelenkgabel 6 ist dazu vorzugsweise zweiteilig ausgeführt. Die Teilung erfolgt im Flanschteil 7, wobei die einzelnen Gelenkgabelhälften 6.1 und 6.2 dann durch einen Flanschteil 7.1 und 7.2 charakterisiert sind und jede Gelenkgabelhälfte 6.1 und 6.2 ein Lagerteil umfassen. Hier ist die Gelenkgabelhälfte 6.2 in Form des Lagerteiles 9 dargestellt. Die Lagerung in den Lagerteilen 8 und 9 erfolgt in Lagerbohrungen, hier beispielhaft nur für die Gelenkgabelhälfte 6.1, insbesondere den Lagerteil 8, dargestellt. Die Lagerbohrung ist mit 12 bezeichnet. Die zu den in der Gelenkgabel 6 gelagerten Zapfen 4 und 5 um 90° versetzt angeordneten Zapfen des Zapfenkreuzes 3 sind wie bereits ausgeführt in einer weiteren, hier im Einzelnen nicht dargestellten Gelenkgabel gelagert. Die Gelenkgabel ist dabei beispielsweise mit einem, hier nicht dargestellten Maschinenteil der Antriebsseite und die hier nicht dargestellte Gelenkgabel für die anderen Zapfen des Zapfenkreuzes 3 mit einem Maschinenteil der Abtriebsseite gekoppelt. Die Zapfenachsen Z_{4,5} und die Zapfenachse Z der hier nicht dargestellten Zapfen können dabei wie dargestellt in einer Ebene oder in zwei zueinander versetzten parallel angeordneten Ebenen angeordnet sein. Das einzelne Lagersystem 10 umfasst ein Radiallager 13. Das Radiallager 13 ist vorzugsweise als Wälzlager ausgeführt. Dieses umfasst beispielsweise einen Außenring 14 und Wälzelemente 15. Die innere Lauffläche für die Wälzelemente 15 wird beispielsweise vom Außenumfang 16 des im Lagerteil 8 gelagerten Zapfens 4 gebildet. Des Weiteren umfasst das Lagersystem 10 ein Axiallager 17. Das Axiallager 17 ist gemäß einer ersten Ausführung im Bereich der Zapfenwurzel 18 des Zapfens 4 angeordnet. Dieses kann als Wälzlager oder aber beispielsweise auch als Gleitlager ausgeführt sein. Im dargestellten Fall ist das Axiallager 17 als Gleitlager 19 ausgeführt. Das Gleitlager 19 umfasst dabei ein scheibenförmiges Element 20, welches mit den Anschlusselementen Gleitpaarungen bildet. Dabei werden die einzelnen Gleitflächen bildenden Elemente 21 und 22 der Gleitpaarung 20 beispielsweise vom Außenring 14 des Radiallagers 13 und dem scheibenförmigen Element 20 gebildet werden. Das scheibenförmige Element 20 stützt sich im dargestellten Fall auf einem Druckring 23 über eine wenigstens teilelastische Federeinheit 2 am Zapfenkreuz 3, insbesondere am Zapfen 4 ab. Denkbar wäre auch die Ausbildung des Axiallagers 17 als Wälzlager. In diesem Fall würde dieses Wälzelemente umfassen, die sich an einer zur Gelenkachse G, unter welcher die Achse durch den in einer Ebene gelegten Schnittpunkt der Zapfenachsen Z_{4,5} und Z zu verstehen ist, gerichteten Stirnfläche 24 des Außenringes 14 des Radiallagers 13 abstützen. Dabei kann die zur Gelenkachse G gerichtete Stirnfläche 24 des Außenringes 14 des Radiallagers 13 direkt die äußere Lauffläche für die Wälzelemente des Axiallagers 17 bilden. Denkbar ist es auch, dass diese Stirnfläche 24 die Abstützfläche für das die Lauffläche bildende Element bildet. Die innere Lauffläche ist bei Betrachtungsweise von der Gelenkachse G in Richtung zur Stirnfläche 25 des Zapfens 4 entgegen dieser ausgerichtet und kann dann direkt vom Druckring 23 gebildet werden oder aber einem separaten, eine Lauffläche bildenden Element, welches sich über den Druckring 23 abstützt. Zur Erleichterung der Einfederung und zur Vermeidung von Verschiebungen in Umfangsrichtungen ist der teilelastischen Federeinheit 2 eine Zentriereinheit 26 zugeordnet, welche beispielsweise von einem Dichtungshalter gebildet wird, der am Zapfen 4 bzw. am Zapfen 3 befestigt wird. Entscheidend ist, dass eine Zentrierung gegenüber dem Zapfen 4 in Umfangsrichtung erfolgt.

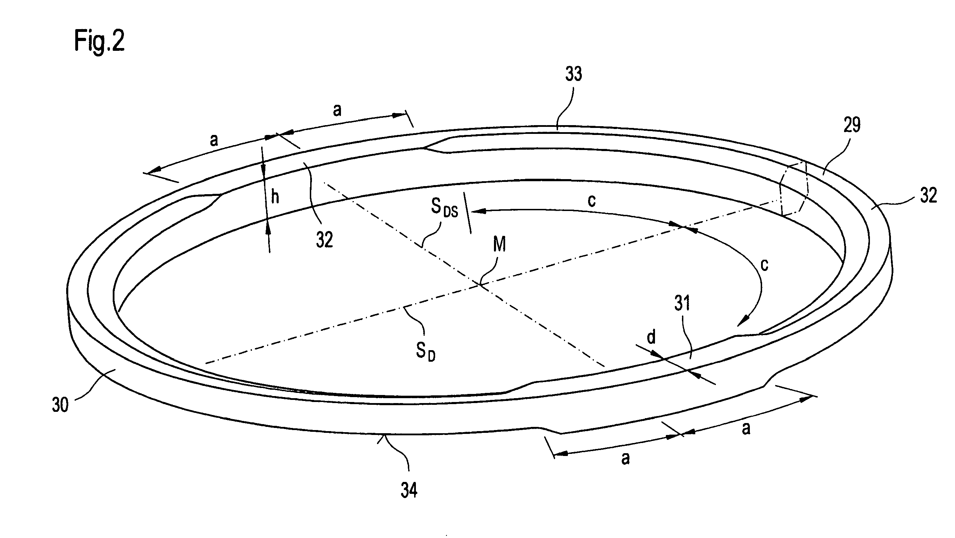

Die konkrete Ausführung der teilelastischen Federeinheit 2 ist beispielhaft in der Figur 2 wiedergegeben. Diese verdeutlicht dabei eine perspektivische Ansicht mit strichpunktierter Darstellung der Querschnittsverläufe. Aus der Figur 2 wird dabei ersichtlicht, dass die teilelastische Federeinheit 2 als ringförmiges Element 28 ausgebildet ist. Je nach Werkstoffwahl ist dieses aus einem Federstahl oder als Elastomer oder gummielastisches Element ausgeführt. Entscheidend ist, dass das gummiförmige Element von seiner Materialwahl bereits eine Elastizität aufweist, die durch ein E-Modul im Bereich von 5000 bis 50000 N/mm², vorzugsweise 5000 bis 20000 N/mm² charakterisiert ist. Die teilelastische Federeinheit 2 ist durch wenigstens zwei Bereiche mit unterschiedlichen Querschnitten charakterisiert. Vorzugsweise wird die teilelastische Federeinheit 2 derart ausgeführt, dass die Bereiche unterschiedlicher Querschnitte symmetrisch angeordnet sind, so dass in Einbaulage in einer Kreuzgelenkanordnung 1 die Funktion unabhängig von der Drehrichtung der Kreuzgelenkanordnung 1 gewährleistet ist. Im Leerlauf, d. h. unbelastetem Zustand, ist diese spielfrei. Im belastetem Zustand wird ein teilelastischer Formschluss erzielt. Dazu weist die teilelastische Federeinheit 2, bezogen auf eine sich durch den theoretischen Mittelpunkt M erstreckende erste Symmetrielinie S_{D}, zwei symmetrisch zueinander angeordnete Bereiche 29 und 30 auf, welche die formschlüssig sich anschmiegenden Tragbereiche bzw. Abstützbereiche für das Axiallager 17, insbesondere die Gleitflächen bildenden Elemente 21 und 22 des Axiallagers 17 im belasteten Zustand unter Wirkung der Umfangskraft bilden. Diese Abstützbereiche 29 und 30 sind symmetrisch zueinander angeordnet und hinsichtlich der Geometrie des Querschnittes identisch ausgeführt. Die Abstützbereiche 29 und 30 erstrecken sich dabei in Umfangsrichtung der teilelastischen Federeinheit 2, vorzugsweise in einem bestimmten Abstand c in Umfangsrichtung betrachtet von der Symmetrielinie S_{D}. Die Ausgestaltung der Abstützbereiche 29, 30 weist ferner zu einer senkrecht zur Symmetrieachse S_{D} durch den Mittelpunkt gehenden Achse S_{DS} ebenfalls einen symmetrischen Aufbau auf. Diese Abstützbereiche 29 und 30 werden auch als teilaktive Abstützbereiche bezeichnet. Ferner sind Abstützbereiche 31 und 32 vorgesehen. Diese erstrecken sich gleichmäßig in Umfangsrichtung der elastischen Federeinheit 2 betrachtet von der Symmetrielinie S_{DS} über eine Abmessung a. Dabei erfolgt im Bereich der Abmessung a in Umfangsrichtung ausgehend von der Symmetrieachse S_{DS} jeweils der Übergang zu den unter Belastung stärker beanspruchten Bereichen 29 und 30. Die Abstützbereiche 31 und 32 sind dabei gegenüber den teilaktiven Bereichen 29 und 30 jeweils durch eine Querschnittsverstärkung, insbesondere in Höhenrichtung der teilelastischen Federeinheit 2, charakterisiert. D. h., die Dickenabmessungen sind in diesem Bereich größer. Dies gilt sowohl wenigstens für die Höhenabmessung als auch für die Breitenabmessung d in diesen Bereichen. D. h., dass die den Querschnitt charakterisierenden Abmaße in Höhenrichtung h größer sind als in den Bereichen 29 und 30, welche ebenfalls symmetrisch bezogen zur Symmetrieachse S_{D} angeordnet sind. Dabei ist es unerheblich, welche der beiden Stirnflächen 33 oder 34 in Einbaulage als Abstützfläche für das Axiallager 17 fungiert und welche der Stirnflächen 33 oder 34 sich am Zapfenkreuz 3 abstützt. Vorzugsweise wird die elastische Federeinheit 2 derart ausgestaltet, dass diese lediglich im Hinblick auf eine Zentrierung in Umfangsrichtung eingebaut werden muss, nicht jedoch hinsichtlich der Anordnung bzw. Ausrichtung der Stirnflächen 33 und 34. Der Einbau in die Kreuzgelenkanordnung gemäß Figur 1 erfolgt nun derart, dass die Abstützbereiche 29 und 30 jeweils in Umfangsrichtung, d. h. Rotationsrichtung, des Zapfenkreuzes 3 angeordnet sind, d.h. die Symmetrieachse S_{D} liegt in einer Ebene, welche durch die Zapfenachse Z_{4,5} und z eine Senkrechte zu dieser sowie zur Gelenkachse G bzw. der Zapfenachse Z_{4,5} und der Zapfenachse der senkrecht zu dieser angeordneten Zapfen ist. Die Senkrechte S_{DS} zur Symmetrieachse S_{D} der teilelastischen Federeinheit 2 verläuft dabei senkrecht zu der durch die und Zapfenachse Z und Z_{4,5} beschriebenen Ebene. Dadurch werden die durch die Querbeschleunigung entstehenden Axialkräfte, welche in Richtung der Zapfenachse Z_{4,5} von der Gelenkachse G weg, hier beispielsweise in Richtung der Gelenkgabelhälfte 6.2, wirken, zu einer Belastung des in dieser Richtung liegenden Axiallagers 17 und zur Entlastung des in Zapfenachsrichtung entgegen der Wirkungsrichtung der Axialkräfte auf der Seite der Gelenkgabelhälfte 6.1 liegenden Axiallagers 17 führen. Das entlastete Lager kann in diesem Betriebszustand auch als passives Lager und das belastete als aktives Lager bezeichnet werden. Dabei bewirkt eine in Richtung der Zapfenachse Z_{4,5} zur zweiten Gelenkgabelhälfte 6.2 von der Gelenkachse G weg wirkende Axialkraft eine axiale Verschiebung des Außenringes 14 des Radiallagers 13, wodurch das Axiallager 17 entlastet wird. Es erfolgt dabei keine Kraftübertragung über das zur Lagerung des Zapfens in der Gelenkgabelhälfte 6.1 vorgesehene Axiallager. An der gegenüberliegenden Gelenkgabelhälfte, der Gelenkgabelhälfte 6.2 wird der Außenring des Radiallagers 13 einer Druckbeanspruchung unterzogen. Die Axialkraft stützt sich dann aufgrund der teilelastischen Federeinheit 2 gleichmäßig über den auf Druck beanspruchten äußeren Bund des Radiallagers auf der Gelenkgabelhälfte ab.

Die Verformung der Drehmoment übertragenden Bauteile einer Kreuzgelenkanordnung 1 ist in Umfangsrichtung der Kraft dabei derart extrem, dass es in der Lagerung zu einer ungleichmäßigen Kraftverteilung kommt und nur ein Bruchteil der möglichen Tragzahl genutzt wird. Die dabei fehlende Planparallelität der Axiallagerlaufbahnen bzw. Gleitflächen bewirkt in der Regel eine vorzeitige Ermüdung bzw. Verschleiß dieser und bei Verwendung von Wälzkörpern eine plastische Verformung mit ihren Folgen. Andererseits werden aber die zugesicherten dynamischen und statischen Tragzahlen der Lager durch die Lagerherstellung nur in einer sehr steifen Lageranschlusskonstruktion garantiert. Um die Planparallelität der Gleitflächen bildenden Elemente 21 und 22 zu gewährleisten, ist die teilelastische Federeinheit 2 derart integriert, dass diese unter Belastung immer gegeben ist. Aufgrund der teilelastischen Ausführung ist im Abstützbereich 29 und 30, dem Bereich der stärksten Verformung, immer eine Abstützung gegeben, wobei aufgrund der in Umfangsrichtung verteilten unterschiedlichen elastischen Ausführungen der teilelastischen Federeinheit 2 ein flächiges Anlegen der teilelastische Federeinheit 2 an den Druckring 23, insbesondere die zu diesem gerichtete Fläche 35, gegeben ist. Die erfindungsgemäße Lösung ist dadurch charakterisiert, dass die teilelastische Federeinheit 2 im Leerlauf nahezu spielfrei ist und einen teilelastischen Formfluss ermöglicht. Der Flächentraganteil wird aufgrund der Verstärkung der Abstützbereiche in den Bereichen hoher Lastwirkung und mit dem Einfluss der Umfangskraft erhöht. In den Bereichen, wo die Verformung klein ist, ist eine starre Ausführung vorgesehen, während in Bereichen, wo die Verformung auftritt, eine weiche Lösung vorgesehen ist. Die Abstützbereiche 29 und 30 sind dabei in Umfangsrichtung betrachtet in den Bereichen hoher Axialkräfte angeordnet.

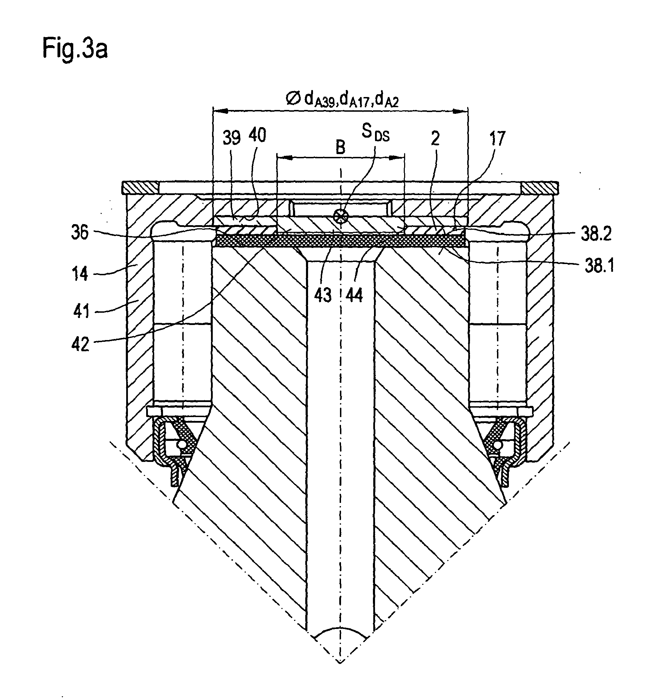

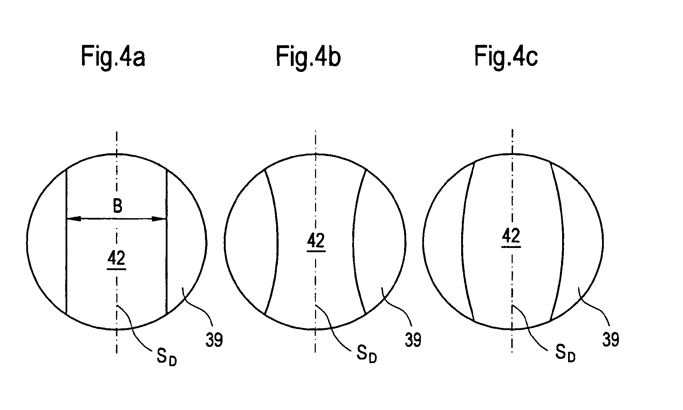

Die Figur 3a verdeutlicht eine erste Ausführung der Anordnung des Ausgleichselementes in Form der teilelastischen Federeinheit 2 für eine Anordnung des Axiallagers 17 an der Zapfenstirnseite 36. Bei dieser Ausführung ist das Axiallager 17, insbesondere das dieses bildende scheibenförmige Element 20, derart an der Zapfenstirnseite angeordnet, dass dieses mit seiner Gleitfläche 38.1 an der Zapfenstirnseite 36 anliegt. Die andere Gleitfläche 38.2 stützt sich am Ausgleichselement 2 ab. Die Abstützung erfolgt dann über das Ausgleichselement in Form der teilelastischen Federeinheit 2 und ein Zentrierelement 39 am Innenumfang 40 einer den Außenring 14 des Radiallagers bildenden Buchse 41. Über diese erfolgt beim Einbau in die Gelenkgabel 6 die Abstützung an dieser. Das Zentrierelement 39 ist hier als scheibenförmiges Element ausgeführt, welches einen Vorsprung 42 aufweist, der sich in den vom ringförmigen Element in Form der teilelastischen Federeinheit 2 gebildeten Innenraum 43 erstreckt und vorzugsweise an der Innenkontur 44 der teilelastischen Federeinheit 2 flächig, vorzugsweise unter Spiel, anliegt. Im dargestellten Fall ist der Außendurchmesser d_{A39} derart gewählt, dass dieser mit dem Außendurchmesser d_{A}17 des Axiallagers korrespondiert. Dies gilt in Analogie auch für den Außendurchmesser d_{A2} der teilelastischen Federeinheit 2. Der Vorsprung 42 ist durch eine Breite B charakterisiert. Diese erstreckt sich über die gesamte Ausdehnung des Zentrierelementes 39, vorzugsweise entlang der in Einbaulage mit der Symmetrieachse S_{DS} des teilelastischen Federelementes zusammenfallenden Symmetrieachse S_{DS}. Andere Geometrien sind denkbar, beispielsweise eine konvexe oder konkave Gestaltung oder aber eine mehreckige Geometrie, wobei in diesem Fall die Innenkontur 44 der teilelastischen Federeinheit 2 entsprechend anzupassen wäre. Mögliche Vorsprungsgestaltungen sind in Figur 4 wiedergegeben.

Die Figuren 4a bis 4c verdeutlichen mögliche Ausführungen zur Realisierung der Zentrierfunktion. Das Zentrierelement 39 kann dabei von einem separaten, vorzugsweise kreisförmigen Element gebildet werden oder direkt vom Lageranschlusselement Gelenkgabel zapfen. Diese weisen Abstützbereiche in form von Vorsprüngen 42 auf, die durch Zusammenwirken mit von komplementären Ausnehmungen bzw. einer komplementären Ausführung der Innenkontur der Ausgleichselemente 2 zusammenwirken. Daran wird ersichtlich, dass der Abstützbereich sich vorzugsweise jeweils über die gesamte Erstreckung parallel zur Symmetrieachse S_{D} erstreckt. Die Figur 4a verdeutlicht dabei eine Ausführung mit konstanter Breite B, während Figur 4b eine Ausführung mit konkaver und Figur 4c eine Ausführung mit konvexer Geometrie wiedergibt. Andere Geometrien sind denkbar.

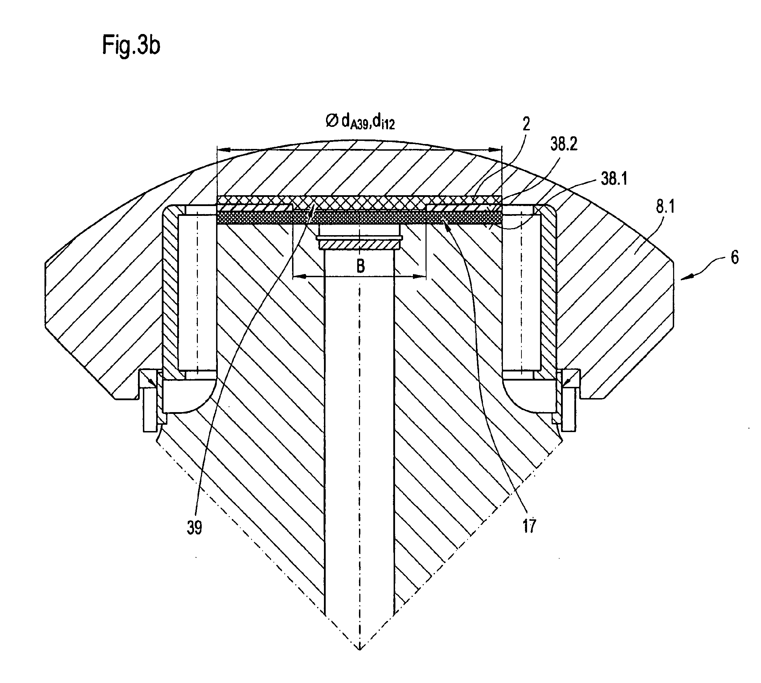

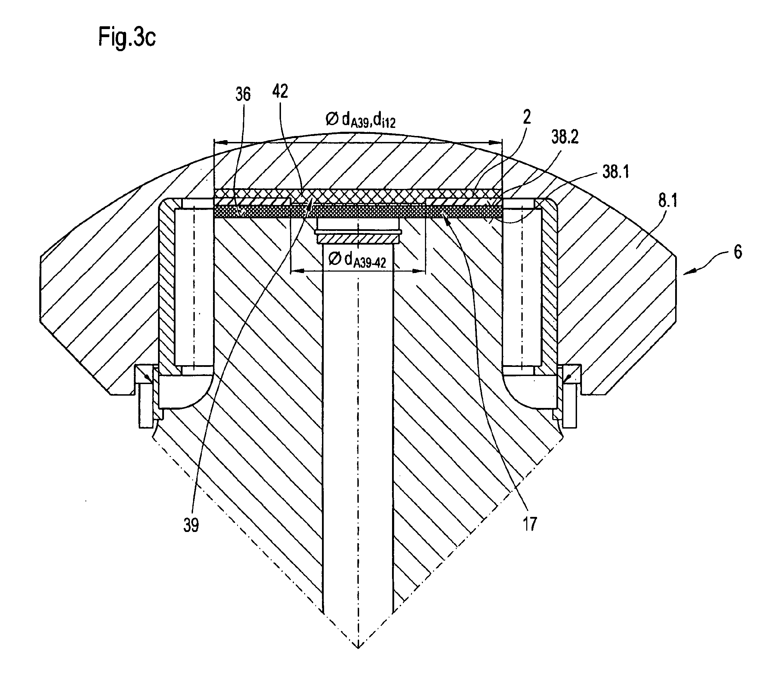

Die Figur 3b verdeutlicht eine Ausführung gemäß Figur 3a, wobei jedoch das Axiallager 17 sich über die teilelastische Federeinheit 2 und das Zentrierelement 39 direkt an der Gelenkgabel 6, insbesondere dem Lagerteil 8, abstützt. Auch hier liegt die Gleitfläche 38 direkt an der Zapfenstirnseite 36 auf. Die gegenüberliegende Gleitfläche stützt sich dabei direkt über das Federelement 2 an der Gelenkgabel 6, insbesondere dem Lagerteil 8.1, ab zwischengeschaltet oder einteilig mit diesem ausgeführt ist ein Zentrierelement 39. Der Außendurchmesser d_{A39} des Zentrierelementes ist dabei an den Innendurchmesser dᵢ₁₂ der Lagerbohrung angepasst. Auch hier ist zur sicheren Bestimmung der Einbaulage das Zentrierelement 39 mit einem Vorsprung 42 vorgesehen, der nicht rotationssymmetrisch ausgeführt ist, sondern eine Lagerorientierung des Ausgleichselementes in Form der teilelastischen Federeinheit 2 ermöglicht. Der Vorsprung 42 kann dabei, wie bereits für die Figur 3a ausgeführt, mit gleichem Querschnitt über die gesamte Erstreckung entlang einer Symmetrieachse des Zentrierelementes 39 ausgeführt werden. Denkbar ist ferner eine Ausführung mit beliebiger Geometrie, beispielsweise eine konvexe oder konkave Ausgestaltung oder eine Ausführung in Form eines Vieleckes. Das Zentrierelement 39 ist dabei zwischen der Gelenkgabel 6, insbesondere dem Lagerteil 8.1 und dem Ausgleichselement angeordnet. Demgegenüber verdeutlicht Figur 3c eine Ausgestaltung gemäß Figur 3b mit rotationssymmetrischem Vorsprung 42. Dieser ist durch einen Durchmesser d_{A39-42} charakterisiert.

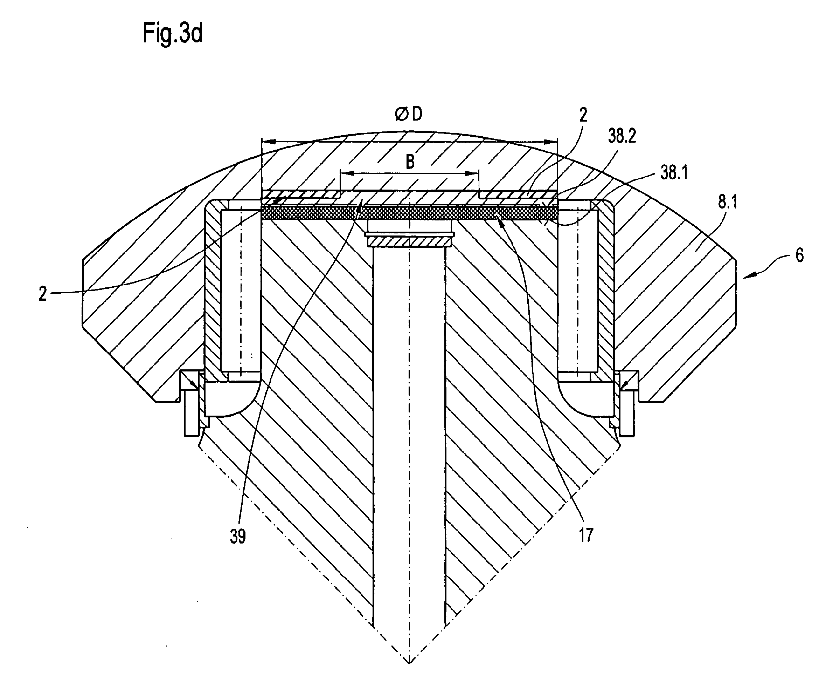

Demgegenüber verdeutlicht die Figur 3d eine alternative Anordnung der teilelastischen Federeinheit 2. Diese ist dabei zwischen dem Zentrierelement 39 und dem Lagerteil 8.1 angeordnet. Dies bedeutet, das Axiallager 17, insbesondere das scheibenförmige Element, stützt sich dabei über das Zentrierelement 39 und die teilelastische Federeinheit 2 in der Lagerbohrung 12 an der Gelenkgabel ab. Die Figur 3d verdeutlicht dabei eine Ausführung eines Zentrierelementes 39 mit nicht rotationssymmetrischem Vorsprung 42. Dieser ist durch eine Breite B über den gesamten Durchmesser betrachtet charakterisiert. Zur Gewährleistung der Funktion ist dabei jedoch das Zentrierelement als scheibenförmiges Element mit geringer Dicke d ausgeführt.

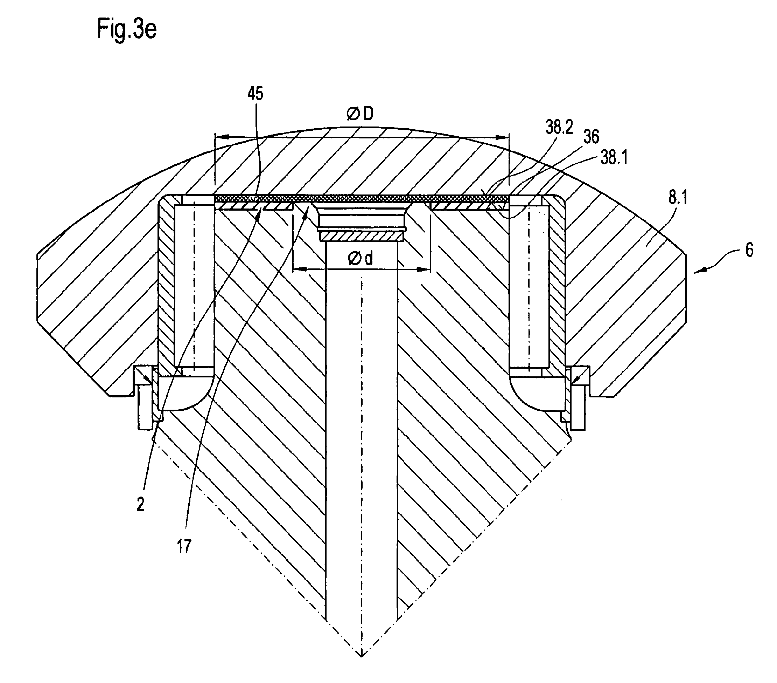

Bei allen Ausführungen gemäß Figur 3a bis 3d stützt sich die Gleitfläche 38.1 an der Zapfenstirnseite direkt ab. Demgegenüber verdeutlicht Figur 3e eine Ausführung mit Abstützung der Gleitfläche 38.1 über das Ausgleichselement 2 an der Zapfenstirnseite und eine Abstützung von 38.2 direkt an der Gelenkgabel 6.

Die Figur 3e verdeutlicht eine weitere Ausführung der Anordnung des Axiallagers 17 an der Zapfenstirnseite 36. Diese stützt sich über die teilelastische Federeinheit 2 an der Zapfenstirnseite 36 ab. Dies bedeutet, die Gleitfläche 38.1 stützt sich dabei über die teilelastische Federeinheit 2 an der Stirnseite 36 des Zapfens ab, während die gegenüberliegende Gleitfläche 38.2 direkt an der Innenfläche 45 der Lagerbohrung 12, insbesondere der Gelenkgabel 6, anliegt. Die Ausführung gemäß Figur 3d ist frei von einem separaten Zentrierelement. Diese Zentrierfunktion wird vom Zapfen, insbesondere einer entsprechenden Ausgestaltung der Zapfenstirnseite 36 übernommen. Hier wird ein kreisrunder Vorsprung 42 gebildet. Demgegenüber verdeutlicht die Figur 3e eine Ausführung gemäß Figur 3d mit Zentrierelement, wobei dieses direkt von der Gelenkgabel 6, insbesondere dem Lagerteil 8.1, gebildet wird. Der Vorsprung 42 ist hier direkt in die Gelenkgabelhälfte bzw. den Lagerteil 8.1 durch entsprechende Ausgestaltung der Lagerbohrung eingearbeitet. Der Vorsprung 42 ist dabei durch einen kreisrunden Querschnitt charakterisiert.

Die Figuren 3a bis 3e verdeutlichen beispielhaft Möglichkeiten der Anordnung der einzelnen Elemente der Axiallager 17 sowie der Anschlusselemente zueinander, insbesondere unter Zwischenschaltung eines. Diese Möglichkeiten sind Beispiele. Die erfindungsgemäße Lösung ist dabei nicht auf diese beschränkt. Ferner ist jede beliebige Reihenfolge von Zentrierelement, Ausgleichselement und Axialgleitlager möglich.

Bezüglich der Wahl der einzelnen Querschnittsverlaufe bestehen eine Vielzahl von Möglichkeiten. Vorzugsweise werden jedoch Querschnitte gewählt, die durch die Ausbildung ebener Flächen charakterisiert sind. Dies bedeutet, dass vorzugsweise rechteckige oder quadratische Querschnitte zum Einsatz gelangen. Lediglich die Übergangsbereiche sind dann durch eine andere Querschnittskonfiguration charakterisiert.

### Bezugszeichenliste

- 1: Kreuzgelenkanordnung
- 2: teilelastische Federeinheit
- 3: Zapfenkreuz
- 4, 5: Zapfen
- 6: Gelenkgabel
- 6.1, 6.2: Gelenkgabelhälfte
- 7: Flanschteil
- 8, 9: Lagerteil
- 10, 11: Lagersystem
- 12: Lagerbohrung
- 13: Radiallager
- 14: Außenring
- 15: Wälzelement
- 16: Außenumfang
- 17: Axiallager
- 18: Zapfenwurzel
- 19: Gleitlager
- 20: scheibenförmiges Element
- 21: Gleitflächen bildendes Element
- 22: Gleitflächen bildendes Element
- 23: Druckring
- 24: Stirnfläche
- 25: Stirnfläche
- 26: Zentriereinrichtung
- 27: Dichtungshalter
- 28: ringförmiges Element
- 29: Abstützbereich
- 30: Abstützbereich
- 31: Bereich
- 32: Bereich
- 33: Stirnfläche
- 34: Stirnfläche
- 35: Fläche
- 36: Zapfenstirnseite
- 38: Gleitfläche
- 39: Zentrierelement
- 40: Innenumfang
- 41: Buchse
- 42: Vorsprung
- 43: Innenraum
- 44: Innenkontur
- 45: Innenfläche
- d_{A39}: Außendurchmesser
- d_{A17}: Außendurchmesser
- d_{A2}: Außendurchmesser
- B: Breite
- Dᵢ₁₂: Innendurchmesser
- D_{A39-42}: Außendurchmesser
- S_{DS}: Symmetrieachse
- S_{D}: Symmetrieachse
- a: Abstand von der Symmetrieachse in Umfangsrichtung
- Z_{4,5}: Zapfenachse

## Patentansprüche

1. Kreuzgelenkanordnung (1)
mit einem, in zwei zueinander um 90° versetzt zueinander angeordneten Gelenkgabeln (6) gelagerten Zapfenkreuz (3);
jede Gelenkgabel umfasst einen Flanschteil (7) und zwei Lagerteile (8, 9), wobei jeder Lagerteil (8, 9) eine Lagerbohrung aufweist, in welcher die Zapfen des Zapfenkreuzes (3) gelagert sind;
jeder Zapfen (4, 5) ist mittels einer Lageranordnung (10, 11) gelagert;
die Lageranordnung (10, 11) umfasst ein Radiallager (13) und ein im Bereich der Zapfenwurzel (18) oder der Zapfenstirnseite angeordnetes Axiallager (17);
das Axiallager (17) stützt sich wenigstens mittelbar oder direkt über ein Ausgleichselement in Form einer teilelastischen Federeinheit (2) am Zapfenkreuz (3) oder der Gelenkgabel (6) ab, wobei
die teilelastische Federeinheit (2) als ringförmiges Element ausgeführt ist, welches in Umfangsrichtung Bereiche unterschiedlicher Querschnittsgestaltung aufweist, **gekennzeichnet durch** die folgenden Merkmale:
das ringförmige Element umfasst zwei bezüglich einer ersten Symmetrieachse S_{D} symmetrisch angeordnete und mit dem gleichen Querschnitt versehene erste Abstützbereiche (31, 32), die gegenüber den angrenzenden und unter Belastung als teilaktive Abstützbereiche fungierenden Bereichen (29, 30) in Umfangsrichtung **durch** in Höhenrichtung und/oder Dickenrichtung des ringförmigen Elementes größere Abmessungen charakterisiert sind;
jeder der einzelnen Bereiche - erster Bereich und zweiter ausgeführter Abstützbereich (31, 32, 29, 30) ist hinsichtlich seines Verlaufs in Umfangsrichtung von der ersten Symmetrieachse bis zu einer weiteren zweiten, senkrecht zur ersten Symmetrieachse (S_{D}) verlaufenden zweiten Symmetrieachse (S_{DS}) hin betrachtet **durch** eine konstante Querschnittsausgestaltung charakterisiert.

2. Kreuzgelenkanordnung (1) nach Anspruch 1, **dadurch gekennzeichnet, dass** die teilelastische Federeinheit (2) im elastischen Bereich aus einem der nachfolgend genannten Materialien besteht:
- einem Federstahl
- einem Werkstoff mit einem Elastizitätsmodul von 5000 bis 50000 N/mm²
- einem Elastomer
- einem gummielastischen Werkstoff, insbesondere Kautschuk.

3. Kreuzgelenkanordnung (1) nach einem der Ansprüche 1 bis 2, **dadurch gekennzeichnet, dass** die teilelastische Federeinheit (2) durch in Umfangsrichtung einander benachbart angeordnete Bereiche aus unterschiedlichen Materialien oder Materialkombinationen charakterisiert ist, wobei die Materialien sich hinsichtlich ihres E-Moduls unterscheiden.

4. Kreuzgelenkanordnung (1) nach einem der Ansprüche 1 bis 3, **dadurch gekennzeichnet, dass** der Übergang zwischen einem ersten (31, 32) und einem zweiten Abstützbereich (29, 30) mit stetiger Querschnittsanpassung in Umfangsrichtung erfolgt.

5. Kreuzgelenkanordnung (1) nach einem der Ansprüche 1 bis 4, **dadurch gekennzeichnet, dass** das Axiallager (17) als Gleitlager (19) ausgeführt ist, wobei diesem in Richtung zur Gelenkachse (G) ein Druckring (23) zugeordnet ist, wobei das Gleitlager sich über die teilelastische Federeinheit (2) am Zapfenkreuz (3) abstützt.

6. Kreuzgelenkanordnung (1) nach einem der Ansprüche 1 bis 4, **dadurch gekennzeichnet, dass** das Axiallager (17) als Wälzlager ausgeführt ist, wobei die eine Lauffläche von einem Außen- oder Innenring des Radiallagers (13) gebildet wird, während die andere Lauffläche von einem Druckring (23) gebildet wird, der sich über die teilelastische Federeinheit (2) am Zapfenkreuz abstützt.

7. Kreuzgelenkanordnung (1) nach einem der Ansprüche 1 bis 6, **dadurch gekennzeichnet, dass** die Lagerbohrungen als Blindbohrungen ausgeführt sind.

8. Kreuzgelenkanordnung (1) nach einem der Ansprüche 1 bis 7, **dadurch gekennzeichnet, dass** die einzelne Gelenkgabel zweiteilig ausgeführt ist.

9. Kreuzgelenkanordnung (1) nach einem der Ansprüche 1 bis 8, **dadurch gekennzeichnet, dass** die Zapfen (4, 5) des Zapfenkreuzes (3) in zwei zueinander parallelen und versetzt angeordneten Ebenen angeordnet sind.

10. Kreuzgelenkanordnung (1) nach einem der Ansprüche 1 bis 9, **dadurch gekennzeichnet, dass** in Einbaulage in Rotationsrichtung des Zapfenkreuzes betrachtet die Position der teilelastischen Federeinheit (2) derart erfolgt, dass der Querschnitt mit der stärksten Dickenverringerung in einer durch die Zapfenachsen der in der Gelenkgabel gelagerten Zapfen beschreibbaren Ebene liegt.

11. Kreuzgelenkanordnung (1) nach einem der Ansprüche 1 bis 10, **dadurch gekennzeichnet, dass** das Axiallager im Bereich der Zapfenwurzel angeordnet ist.

12. Kreuzgelenkanordnung (1) nach Anspruch 11, **dadurch gekennzeichnet, dass** das Axiallager (17) sich über die die teilelastische Federeinheit (2) und eine Druckscheibe an der Zapfenwurzel abstützt und ferner eine Gleitpaarung mit dem Außenring des Radiallagers bildet.

13. Kreuzgelenkanordnung (1) nach einem der Ansprüche 1 bis 10, **gekennzeichnet durch** die folgenden Merkmale:
das Axiallager (17) ist an der Zapfenstirnseite (36) angeordnet;
das Axiallager (17) stützt sich wenigstens mittelbar an der Stirnseite (36) des in der Gelenkgabelhälfte (8) gelagerten Zapfens und/oder der Gelenkgabel (6) ab.

14. Kreuzgelenkanordnung (1) nach Anspruch 13, **dadurch gekennzeichnet, dass** sich das Axiallager (17) über die teilelastische Federeinheit an der Stirnseite des Zapfens (36) abstützt.

15. Kreuzgelenkanordnung (1) nach einem der Ansprüche 13 oder 14, **dadurch gekennzeichnet, dass** sich das Axiallager (17) über die teilelastische Federeinheit (2) wenigstens mittelbar an der Gelenkgabelhätfte (8.1) abstützt.

16. Kreuzgelenkanordnung (1) nach Anspruch 15, **dadurch gekennzeichnet, dass** die Abstützung des Axiallagers (17) am Innenumfang einer vom Außenring (14) des Radiallagers gebildeten Buchse erfolgt.

17. Kreuzgelenkanordnung (1) nach einem der Ansprüche 13 bis 16, **dadurch gekennzeichnet, dass** zwischen teilelastischer Federeinheit (2) und Anschlusselement in Form der Gelenkgabelhälfte (18.1) oder der Zapfenstirnseite ein Zentrierelement (39) vorgesehen ist.

18. Kreuzgelenkanordnung (1) nach Anspruch 17, **dadurch gekennzeichnet, dass** das Zentrierelement (39) zwischen dem Außenring (14) des Radiallagers, welcher einen sich in radialer Richtung zur Zapfenachse erstreckenden Bund aufweist, und der teilelastischen Federeinheit (2) angeordnet ist.

19. Kreuzgelenkanordnung (1) nach einem der Ansprüche 17 und 18, **dadurch gekennzeichnet, dass** das Zentrierelement (39) scheibenförmig ausgeführt ist und einen in Richtung der teilelastischen Federeinheit (2) sich erstreckenden Vorsprung (42) aufweist, der rotationssymmetrisch ausgeführt ist und von der teilelastischen Federeinheit umschlossen ist.

20. Kreuzgelenkanordnung (1) nach einem der Ansprüche 17 bis 19, **dadurch gekennzeichnet, dass** das Zentrierelement scheibenförmig ausgeführt ist und einen in Richtung der teilelastischen Federeinheit (2) sich erstreckenden Vorsprung (42) aufweist, der komplementär zum Innenumfang (44) der ringförmigen teilelastischen Federeinheit (2) ausgeführt ist und eine beliebige Geometrie, bezogen auf die Symmetrieachse, aufweist.

21. Kreuzgelenkanordnung (1) nach Anspruch 20, **dadurch gekennzeichnet, dass** der Vorsprung (42) sich mit konstanter Breite über die Erstreckung es Zentrierelementes (39) erstreckt.

22. Kreuzgelenkanordnung (1) nach Anspruch 20, **dadurch gekennzeichnet, dass** der Vorsprung (42) konkav oder konvex ausgebildet ist.

23. Kreuzgelenkanordnung (1) nach einem der Ansprüche 17 bis 22, **dadurch gekennzeichnet, dass** das Zentrierelement (39) mit dem Anschlusselement Gelenkgabel (6) oder Zapfen einstückig ist.

## Claims

1. Universal joint arrangement (1)
with one spider (3) mounted in two yokes (6) arranged at an angle of 90° relative to each other:
each yoke comprises a flange member (7) and two bearing members (8, 9), with each bearing member (8, 9) provided with a bearing bore in which the trunnions of the spider (3) are mounted:
each trunnion (4, 5) is mounted by means of a bearing arrangement (10, 11);
the bearing arrangement (10, 11) comprises a radial bearing (13) and one axial bearing (17) arranged in the vicinity of the trunnion root (18) or the outside face of the trunnion;
the axial bearing (17) is supported at least indirectly or directly on the spider (3) or the yoke (6) by means of a compensating element in the form of a partially elastic spring unit (2), with the partially elastic spring unit (2) developed as an annular element provided with areas of varying cross-sectional form in the circumferential orientation, **characterised by** the following features:
the annular element comprises two first bearing areas (31, 32) with identical cross-sections and arranged symmetrically with respect to a first axis of symmetry S_{D}, **characterised by** larger dimensions in terms of height and/or thickness of the annular element in comparison with the adjacent areas (29, 30) functioning under load as semi-active bearing zones;
each of the individual areas - first area and second developed bearing area (31, 32, 29, 30) - is **characterised by** a constant cross-sectional form with respect to its development in the circumferential orientation from the first axis of symmetry to a further second axis of symmetry (S_{DS}) perpendicular to the first axis of symmetry (S_{D}).

2. Universal joint arrangement (1) in accordance with Claim 1 wherein the elastic area of the partially elastic spring unit (2) consists of the following designated materials:
- a material with a modulus of elasticity from 5,000 to 50,000 N/mm²
- an elastomer
- a rubber-elastic material, in particular natural rubber.

3. Universal joint arrangement (1) in accordance with either Claim 1 or Claim 2 wherein the partially elastic spring unit (2) is **characterised by** areas consisting of different materials or combinations of materials arranged adjacently in the circumferential orientation, with the materials differing with respect to their modulus of elasticity.

4. Universal joint arrangement (1) in accordance with any one of Claims 1 to 3 wherein the modification of the cross-section of the transition between a first (31, 32) and a second bearing area (29, 30) is constant in the circumferential orientation.

5. Universal joint arrangement (1) in accordance with any one of Claims 1 to 4 wherein the axial bearing (17) is developed as a sliding bearing (19), with a matching thrust collar (23) in the direction toward the joint axis (G), with the sliding bearing being supported on the spider (3) by means of a partially elastic spring unit (2).

6. Universal joint arrangement (1) in accordance with any one of Claims 1 to 4 wherein the axial bearing (17) is developed as a roller bearing, with the one race being formed by the internal or external ring of the radial bearing (13), while the other race is formed by a thrust collar (23) supported on the spider by means of the partially elastic spring unit (2).

7. Universal joint arrangement (1) in accordance with any one of Claims 1 to 6 wherein the bearing bores are developed as blind holes.

8. Universal joint arrangement (1) in accordance with any one of Claims 1 to 7 wherein the individual yokes are developed as two parts.

9. Universal joint arrangement (1) in accordance with any one of Claims 1 to 8 wherein the trunnions (4, 5) of the spider (3) are arranged on two parallel and displaced planes.

10. Universal joint arrangement (1) in accordance with any one of Claims 1 to 9 wherein the position of the partially elastic spring unit (2) with respect to its assembly position in the direction of rotation of the spider is such that the cross-section with the greatest reduction in thickness lies on a plane described by the trunnion axes of the trunnions mounted in the yoke.

11. Universal joint arrangement (1) in accordance with any one of Claims 1 to 10 wherein the axial bearing is arranged in the vicinity of the trunnion root.

12. Universal joint arrangement (1) in accordance with Claim 11 wherein the axial bearing (17) is supported on the trunnion root by means of the the [sic!] partially elastic spring unit (2) and a thrust plate, also forming a tribological pairing with the external ring of the radial bearing.

13. Universal joint arrangement (1) in accordance with any one of Claims 1 to 10 **characterised by** the following features:
the axial bearing (17) is arranged on the trunnion outside face (36);
the axial bearing (17) is supported at least indirectly on the outside face (36) of the trunnion mounted in the half yoke (8) and/or the yoke (6).

14. Universal joint arrangement (1) in accordance with Claim 13 wherein the axial bearing (17) is supported on the outside face of the trunnion (36) by the partially elastic spring unit (2).

15. Universal joint arrangement (1) in accordance with either one of Claims 13 or 14 wherein the axial bearing (17) is supported on the half yoke (8.1) at least indirectly by means of the partially elastic spring unit (2).

16. Universal joint arrangement (1) in accordance with Claim 15 wherein the axial bearing (17) is supported on the inner circumference of a bush formed by the external ring (14) of the radial bearing.

17. Universal joint arrangement (1) in accordance with any one of Claims 13 to 16 wherein provision is made for a centering element (39) between the partially elastic spring unit (2) and the terminal connection in the form of a half yoke (18.1) or the outside face of the trunnion.

18. Universal joint arrangement (1) in accordance with Claim 17 wherein the centering element (39) is arranged between the outer ring (14) of the radial bearing, which is provided with a collar extending in a radial orientation with respect to the axis of the trunnion, and the partially elastic spring unit (2).

19. Universal joint arrangement (1) in accordance with either of Claims 17 or 18 wherein the centering element (39) is developed in the form of a disk and is provided with a projection (42) extending in the direction of the partially elastic spring unit (2), with said projection being developed in a rotationally symmetrical manner and being enclosed by the partially elastic spring unit.

20. Universal joint arrangement (1) in accordance with any one of Claims 17 to 19 wherein the centering element is developed in the form of a disk and is provided with a projection (42) extending in the direction of the partially elastic spring unit (2), with said projection being developed in a complementary manner with respect to the inner circumference (44) of the annular partially elastic spring unit (2) and being provided with any geometry with respect to the axis of symmetry.

21. Universal joint arrangement (1) in accordance with Claim 20 wherein the projection (42) extends along the extension of the centering element (39) with a constant width.

22. Universal joint arrangement (1) in accordance with Claim 20 wherein the projection (42) is developed concavely or convexly.

23. Universal joint arrangement (1) in accordance with any one of Claims 17 to 22 wherein the centering element (39) is made as one piece with the yoke (6) or trunnion connecting element.

## Revendications

1. Dispositif de joint à croisillon (1)
avec un croisillon de tourillons (3) supporté dans deux fourches d'articulation (6) décalées de 90° l'une par rapport à l'autre,
chaque fourche d'articulation comprend une partie de bride (7) et deux parties de palier (8, 9), chaque partie de palier (8, 9) présentant un alésage de palier dans lequel les tourillons du croisillon de tourillons (3) sont supportés ;
chaque tourillon (4, 5) est supporté au moyen d'une disposition de paliers (10, 11) ;
la disposition de paliers (10, 11) comprend un palier radial (13) et un palier axial (17) disposé au niveau de la racine du tourillon (18) ou de la face d'extrémité du tourillon ;
le palier axial (17) s'appuie au moins indirectement ou directement par l'intermédiaire d'un élément de compensation prenant la forme d'une unité de ressort partiellement élastique (2) sur le croisillon de tourillons (3) ou la fourche d'articulation (6), l'unité de ressort partiellement élastique (2) étant réalisée comme un élément annulaire qui possède dans le sens de la circonférence des zones de forme en section différente,
**caractérisé en ce que** :
l'élément annulaire comprend deux premières zones d'appui (31, 32) disposées de façon symétrique par rapport à un premier axe de symétrie S_{D} et ayant la même section, qui sont **caractérisées, par** rapport aux zones limitrophes (29, 30) dans le sens de la circonférence servant de zones d'appui partiellement actives sous charge, par de plus grandes dimensions dans le sens de la hauteur et/ou le sens de l'épaisseur de l'élément annulaire ;
chacune des zones - première zone et deuxième zone d'appui réalisée (31, 32, 29, 30) - est **caractérisée en ce** qui concerne sa forme dans le sens de la circonférence, dans une vue du premier axe de symétrie à un deuxième axe de symétrie (S_{DS}) perpendiculaire au premier axe de symétrie (S_{D}), par une conformation constante en section.

2. Dispositif de joint à croisillon (1) selon la revendication 1, **caractérisé en ce que** l'unité de ressort partiellement élastique (2) se compose dans la zone partiellement élastique de l'un des matériaux suivants :
- un acier à ressorts,
- un matériau ayant un module d'élasticité de 5000 à 50000 N/mm²,
- un élastomère,
- un matériau élastique caoutchouteux, en particulier du caoutchouc.

3. Dispositif de joint à croisillon (1) selon l'une des revendications 1 à 2, **caractérisé en ce que** l'unité de ressort partiellement élastique (2) est **caractérisée par** des zones voisines les unes des autres dans le sens de la circonférence et faites de matériaux ou de combinaisons de matériaux différents, les matériaux étant différents en ce qui concerne leur module d'élasticité.

4. Dispositif de joint à croisillon (1) selon l'une des revendications 1 à 3, **caractérisé en ce que** la transition entre une première zone d'appui (31, 32) et une deuxième (29, 30) s'effectue avec une modification continue de la section dans le sens de la circonférence.

5. Dispositif de joint à croisillon (1) selon l'une des revendications 1 à 4, **caractérisé en ce que** le palier axial (17) est conçu comme un palier à glissement (19), associé en direction de l'axe d'articulation (G) à une bague d'appui (23), le palier à glissement s'appuyant par l'intermédiaire de l'unité de ressort partiellement élastique (2) sur le croisillon de tourillons (3).

6. Dispositif de joint à croisillon (1) selon l'une des revendications 1 à 4, **caractérisé en ce que** le palier axial (17) est conçu comme un roulement à rouleaux, une surface de roulement étant formée par une bague extérieure ou intérieure du palier radial (13) tandis que l'autre surface de roulement est formée par une bague d'appui (23) qui s'appuie par l'intermédiaire de l'unité de ressort partiellement élastique (2) sur le croisillon de tourillons.

7. Dispositif de joint à croisillon (1) selon l'une des revendications 1 à 6, **caractérisé en ce que** les alésages de palier sont conçus comme des trous borgnes.

8. Dispositif de joint à croisillon (1) selon l'une des revendications 1 à 7, **caractérisé en ce que** chaque fourche d'articulation est construite en deux parties.

9. Dispositif de joint à croisillon (1) selon l'une des revendications 1 à 8, **caractérisé en ce que** les tourillons (4, 5) du croisillon de tourillons (3) sont disposés dans deux plans parallèles l'un à l'autre et décalés.

10. Dispositif de joint à croisillon (1) selon l'une des revendications 1 à 9, **caractérisé en ce que** dans la position de montage, vu dans le sens de rotation du croisillon de tourillons, la position de l'unité de ressort partiellement élastique (2) est telle que la section ayant la plus forte réduction de l'épaisseur se trouve dans un plan pouvant être décrit par les axes de tourillon des tourillons supportés dans la fourche d'articulation.

11. Dispositif de joint à croisillon (1) selon l'une des revendications 1 à 10, **caractérisé en ce que** le palier axial est disposé au niveau de la racine du tourillon.

12. Dispositif de joint à croisillon (1) selon la revendication 11, **caractérisé en ce que** le palier axial (17) s'appuie par l'intermédiaire de l'unité de ressort partiellement élastique (2) et d'une rondelle d'appui sur la racine du tourillon et forme en outre un couplage coulissant avec la bague extérieure du palier radial.

13. Dispositif de joint à croisillon (1) selon l'une des revendications 1 à 10, **caractérisé en ce que** :
le palier axial (17) est disposé sur la face d'extrémité du tourillon (36) ;
le palier axial (17) s'appuie au moins indirectement sur la face d'extrémité (36) du tourillon supporté dans la moitié de fourche d'articulation (8) et/ou la fourche d'articulation (6).

14. Dispositif de joint à croisillon (1) selon la revendication 13, **caractérisé en ce que** le palier axial (17) s'appuie par l'intermédiaire de l'unité de ressort partiellement élastique sur la face d'extrémité (36) du tourillon.

15. Dispositif de joint à croisillon (1) selon l'une des revendications 13 ou 14, **caractérisé en ce que** le palier axial (17) s'appuie par l'intermédiaire de l'unité de ressort partiellement élastique (2), au moins indirectement, sur la moitié de fourche d'articulation (8.1).

16. Dispositif de joint à croisillon (1) selon la revendication 15, **caractérisé en ce que** le palier axial (17) s'appuie sur la circonférence intérieure d'une douille formée par la bague extérieure (14) du palier radial.

17. Dispositif de joint à croisillon (1) selon l'une des revendications 13 à 16, **caractérisé en ce qu'**un élément de centrage (39) est prévu entre l'unité de ressort partiellement élastique (2) et l'élément de raccordement formé par la moitié de fourche d'articulation (18.1) ou la face d'extrémité du tourillon.

18. Dispositif de joint à croisillon (1) selon la revendication 17, **caractérisé en ce que** l'élément de centrage (39) est disposé entre la bague extérieure (14) du palier radial, qui présente un collet s'étendant dans le sens radial vers l'axe du tourillon, et l'unité de ressort partiellement élastique (2).

19. Dispositif de joint à croisillon (1) selon l'une des revendications 17 et 18, **caractérisé en ce que** l'élément de centrage (39) est réalisé en forme de disque et présente une saillie (42) s'étendant en direction de l'unité de ressort partiellement élastique (2), qui est symétrique sur l'axe de rotation et qui est entourée par l'unité de ressort partiellement élastique.

20. Dispositif de joint à croisillon (1) selon l'une des revendications 17 à 19, **caractérisé en ce que** l'élément de centrage est réalisé en forme de disque et présente une saillie (42) s'étendant en direction de l'unité de ressort partiellement élastique (2), qui a une forme complémentaire de la circonférence intérieure (44) de l'unité de ressort partiellement élastique (2) annulaire et qui a une géométrie quelconque par rapport à l'axe de symétrie.

21. Dispositif de joint à croisillon (1) selon la revendication 20, **caractérisé en ce que** la saillie (42) s'étend avec une largeur constante sur l'étendue de l'élément de centrage (39).

22. Dispositif de joint à croisillon (1) selon la revendication 20, **caractérisé en ce que** la saillie (42) est de forme concave ou convexe.

23. Dispositif de joint à croisillon (1) selon l'une des revendications 17 à 22, **caractérisé en ce que** l'élément de centrage (39) est d'un seul tenant avec l'élément de raccordement formé par la fourche d'articulation (6) ou le tourillon.
